# EUROPEAN PATENT APPLICATION

(11) **EP 4 838 129 A1**
(43) Date of publication of application: **11.11.2026**
(21) Application number: 26160594.3
(22) Date of filing: 25.02.2026
(51) Int. Cl.: F16N 7/02, F16N 7/18, F16N 25/00, F16N 27/02, B21D 28/00, B21D 28/24, B23Q 11/12, B30B 1/26, B30B 15/00

(54) **RECIPROCATING DRIVE APPARATUS FOR MACHINE TOOL**

(30) Priority: 05.05.2025 IT 202500009939
(71) Applicant: Dallan S.p.A., 31033 Castelfranco Veneto (Treviso) (IT)
(72) Inventor: DALLAN, Andrea, I-31033 Castelfranco Veneto, TREVISO (IT)
(74) Representative: Zanettin, Gianluigi

(57) **Abstract**

The present invention concerns an apparatus (1) of reciprocating drive for an operating head (101) of a machine tool (100) comprising: a support structure (10) which is suitable for guiding an operating head (101) of said machine tool in an alternating linear movement along a reciprocating drive direction (X); a transmission body (20) which is associated with said support structure (10) and is operable in rotation by motor means (21) around a motor axis (Y) incident to said direction (X); a connecting rod (30) which is eccentrically connected to said transmission body (20) with respect to said motor axis (Y) at a driven portion (31) thereof by means of a rotary joint (33) to impart said alternating linear movement to said operating head (101) which is kinematically connected to a driving portion (32) of said connecting rod, the driven portion (31) of said connecting rod having a stroke along said reciprocating drive direction (X) between an upper dead centre (PMS) and a lower dead centre (PMI); a lubrication system (40) which is suitable to supply lubricant to said rotary joint (33) through a first lubrication nozzle (41) installed on the driven portion (31) of said connecting rod. The lubrication system (40) comprises: a second lubrication nozzle (42), which is integral with said support structure (10) and is positioned to fluidically intercept the first lubrication nozzle (41) when the driven portion (31) of said connecting rod is at the upper dead centre; a lubricant supply circuit (43) in fluidic communication with the second lubrication nozzle (42); an electromechanical valve (44) operatively connected to the lubricant supply circuit; and a timer (45) synchronised with the movement of the connecting rod (30) and configured to activate the electromechanical valve (44) when the driven portion (31) of said connecting rod reaches the upper dead centre.

## Description

### Field of application

The subject of the present invention is a reciprocating drive apparatus for a machine tool.

### Prior art

As is known, many industrial applications comprise mechanical systems suitable for generating an alternating movement for the operation of devices driven by an electric motor.

Typical examples are constituted by stamping, punching and shearing machines which are based on cyclically moving components to perform specific mechanical tasks.

More in detail, these systems use a mechanism for converting a rotary movement (typically generated by an electric motor) into an alternating linear movement to raise and lower a working head. In order to achieve adequate operating efficiency, it is essential to maintain both the reliability and the precise coordination of this movement.

Ensuring a constant movement in such systems represents a recognised challenge in the design and operation of industrial machines, wherein the repetitive and controlled movement directly affects the production quality and the durability of the machines.

Industrial systems frequently aim not only to achieve high precision and repeatability in the movement, but also to effectively reduce wear through appropriate lubrication management.

It is particularly known that machines subjected to dynamic loads require lubrication systems synchronised with their movement in order to minimise the deterioration of components and ensure efficient operation.

All this results in the following operational objectives:
- improvement of the durability of the moving parts;
- reduction of maintenance intervals; and
- maintenance of optimal performance even in the presence of variable operating speeds and stroke lengths.

These objectives drive the need to provide improved mechanisms which can align the delivery of lubrication with the characteristic mechanical movement of such systems.

The existing lubrication systems, although effective under certain operating conditions, may prove to be limited when it comes to supporting more demanding movement profiles.

Many conventional designs provide a constant fluidic connection between the moving part and a fixed on-board lubricant supply circuit in order to provide a continuous flow of lubricant.

An example of a traditional type of reciprocating drive apparatus is illustrated as a whole in figure 1, wherein U denotes the reciprocatingly-actuatable tool head, M the electric motor, T the transmission system with rotating axis, B the system for generating the alternating movement by means of a connecting rod with eccentric attachment, L the lubrication circuit, and C the mobile pipe acting as an extension between circuit L and the head of the connecting rod. Figures 2 and 3 show the positioning of the connecting rod system and tool head respectively at the upper dead centre PMS and the lower dead centre PMI.

This solution is based on the flexibility of the mobile connection pipe and works well when the amplitude of the movement between PMS and PMI is relatively limited. However, as the stroke of the movement increases or the operating speeds accelerate, supplying the lubricant in a timely and efficient manner becomes increasingly difficult. In general, the continuous flow approach may be poorly adaptable to dynamic conditions, wherein timing and precision in the application of the lubricant are important to maintain high performance and minimise mechanical wear.

In situations wherein the movement of mechanical components exceeds traditional limits or operates at higher speeds, conventional methods of lubricant delivery may not adequately address the demanding requirements of these applications. Machines designed for extended strokes encounter difficulties in maintaining effective lubrication due to spatial and temporal constraints that affect the contact of the lubricant with critical moving surfaces.

In the field of reciprocating-drive machine tools, in particular, there is therefore a strongly felt need to provide a reciprocating drive apparatus equipped with a lubrication system capable of reliably adapting to variable operating conditions, ensuring adequate lubrication in any operating regime.

### Description of the invention

Therefore, the main object of the present invention is to eliminate, in whole or in part, the drawbacks of the prior art mentioned above, by providing a reciprocating drive apparatus for a machine tool which is equipped with a lubrication system capable of reliably adapting to variable operating conditions, ensuring adequate lubrication in any operating regime.

A further object of the present invention is to provide a reciprocating drive apparatus which is simple and economical to manufacture.

A further object of the present invention is to provide a reciprocating drive apparatus which is simple and easy to manage.

### Brief description of the drawings

The technical features of the invention, according to the above-stated objects, are clearly identifiable from the content of the claims reported below, and the advantages thereof will be more evident in the detailed description that follows, made with reference to the accompanying drawings, which represent one or more purely exemplary and non-limiting embodiments thereof, in which:

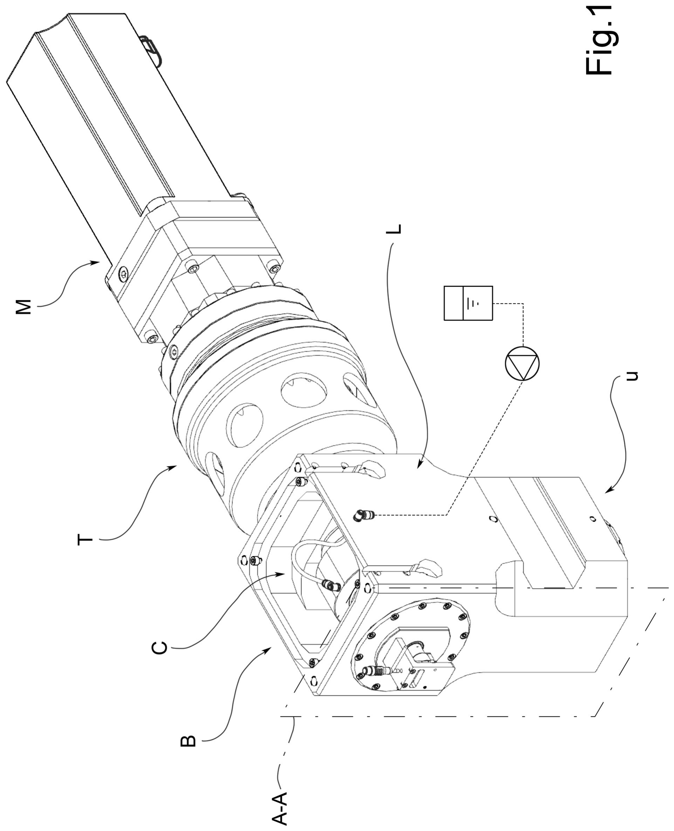

- Figure 1 shows a perspective view of a reciprocating drive apparatus for a traditional machine tool, with some parts removed to better highlight others;

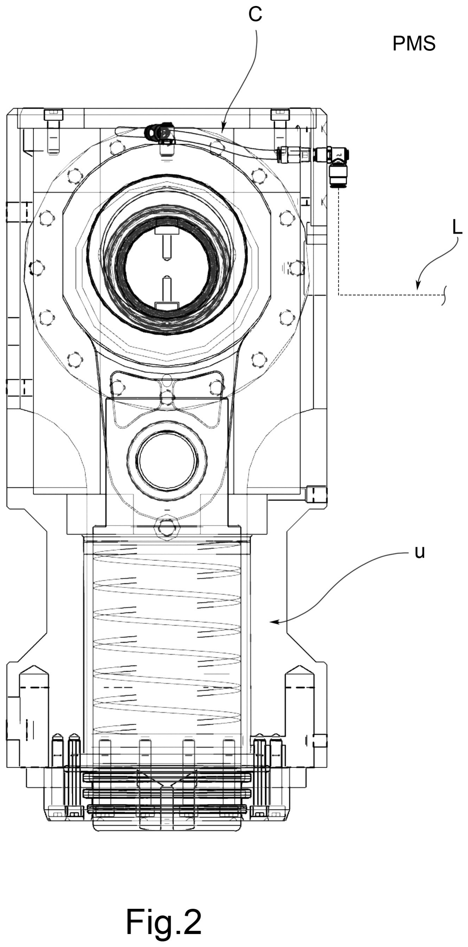

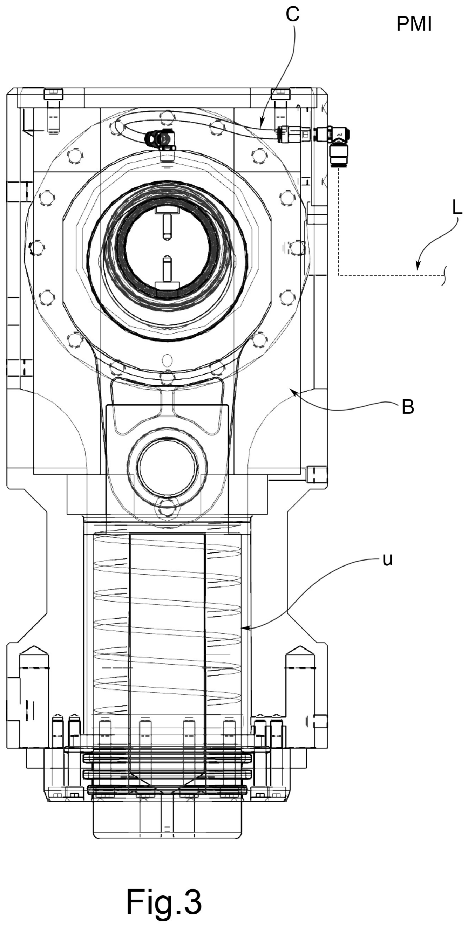

- Figures 2 and 3 show two sectional views of the apparatus of figure 1 illustrated with a connecting rod respectively at the upper dead centre and at the lower dead centre according to the section plane A-A shown therein;

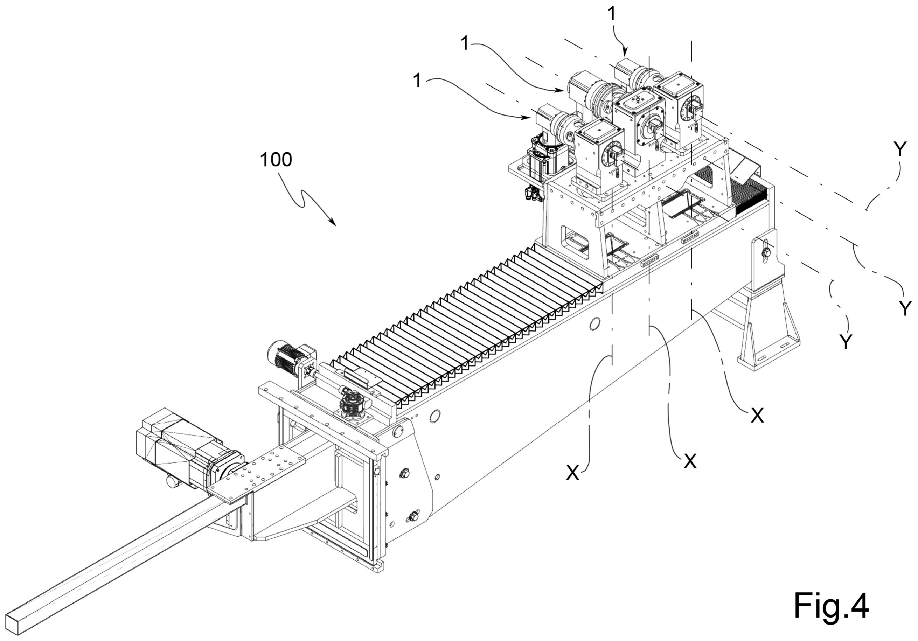

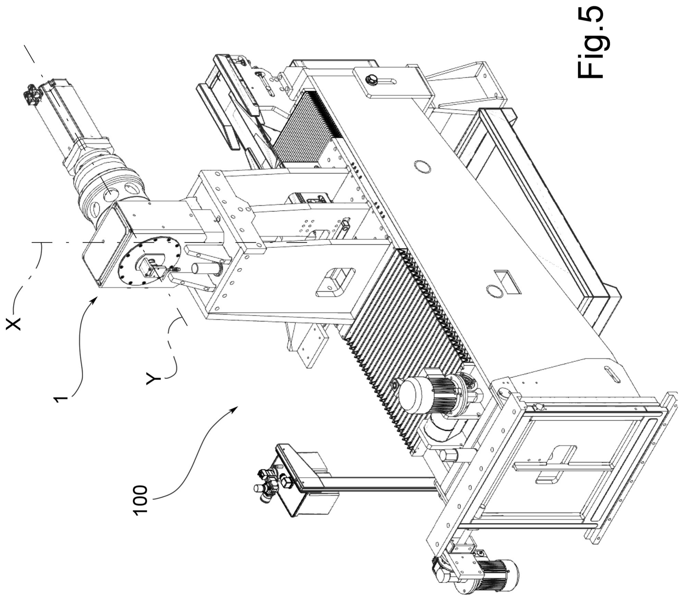

- Figures 4 and 5 show two shearing machine tools according to the invention provided respectively with three distinct reciprocating drive apparatuses and with a single reciprocating drive apparatus;

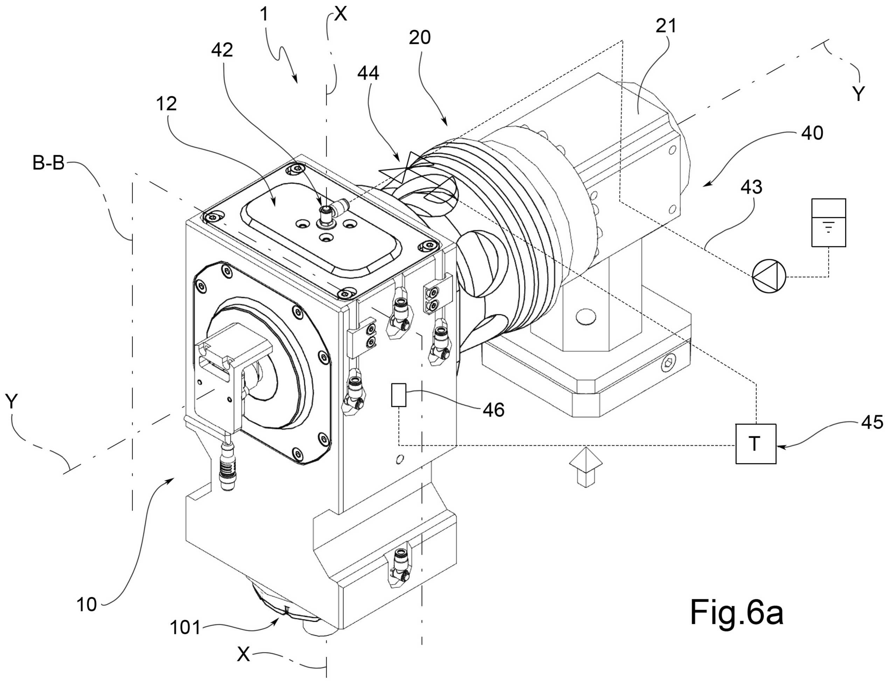

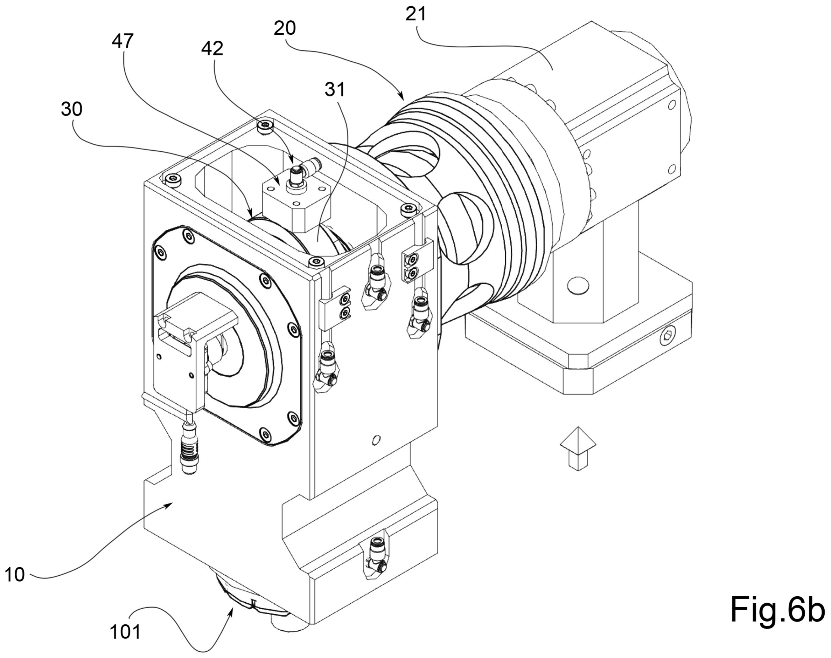

- Figures 6a and 6b show a perspective view of a reciprocating drive apparatus for a machine tool according to a preferred embodiment of the invention, respectively with and without a cover for access to the upper dead centre;

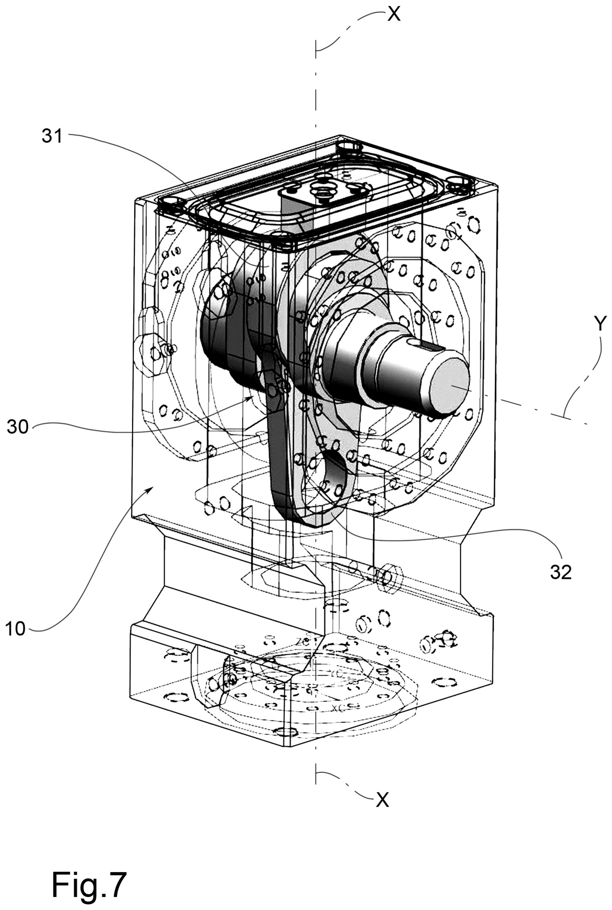

- Figure 7 shows a transparent perspective view of a support structure of the apparatus of figure 6;

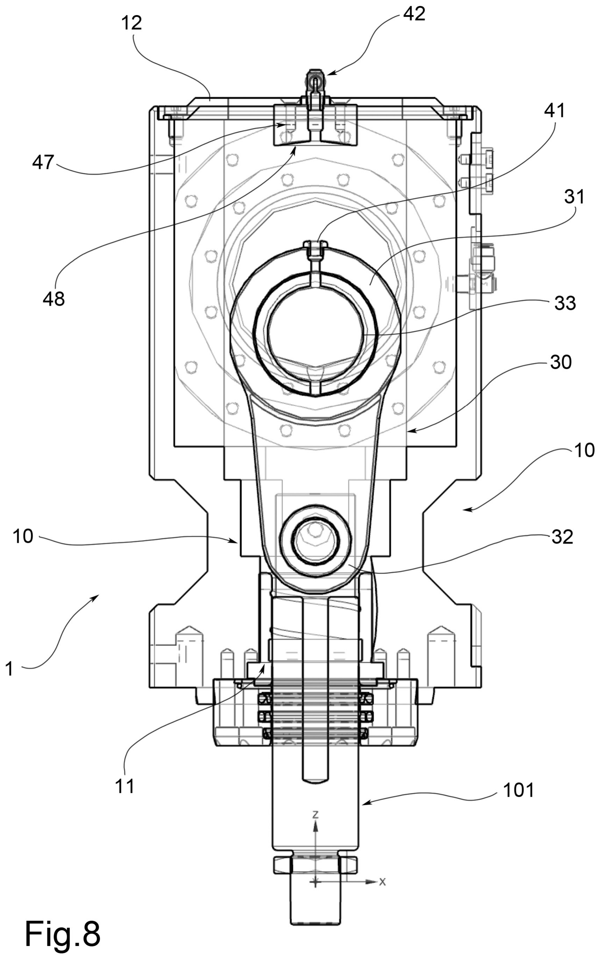

- Figure 8 shows an orthogonal sectional view of the apparatus of figure 6a illustrated with a connecting rod at the upper dead centre according to the section plane B-B shown therein;

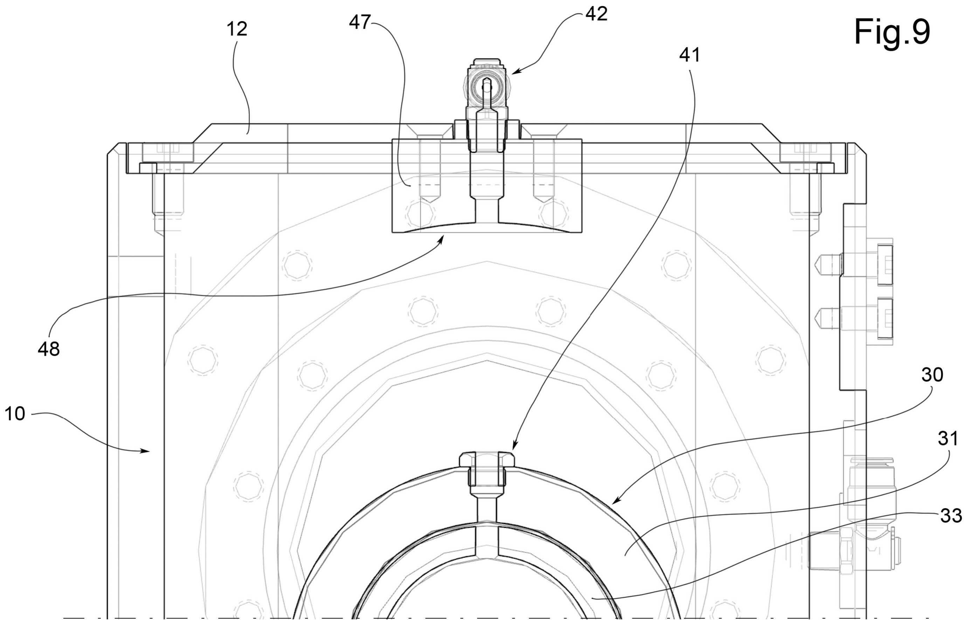

- Figure 9 shows an enlarged view of a detail of figure 8;

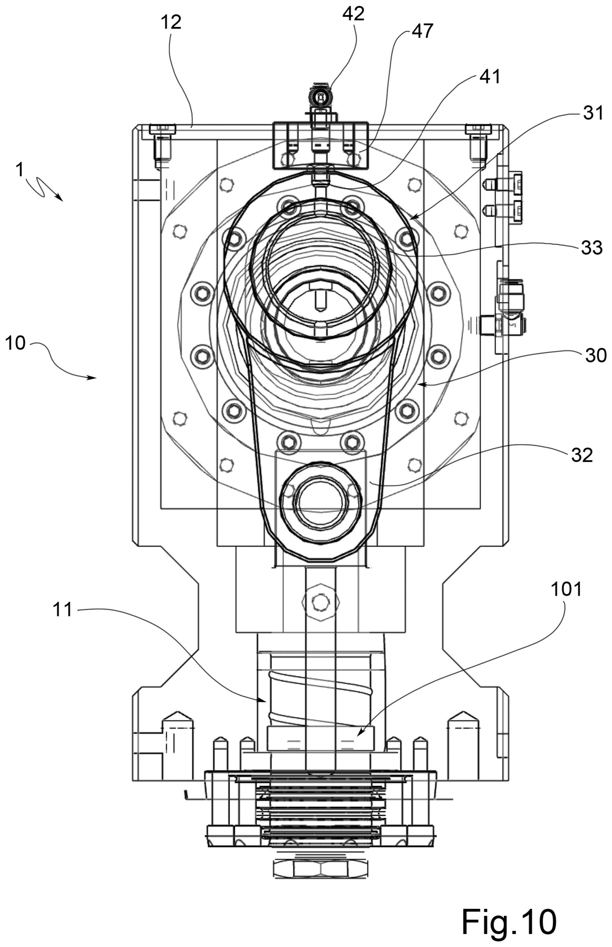

- Figure 10 shows an orthogonal sectional view of the apparatus of figure 6a illustrated with a connecting rod at the lower dead centre according to the section plane B-B shown therein;

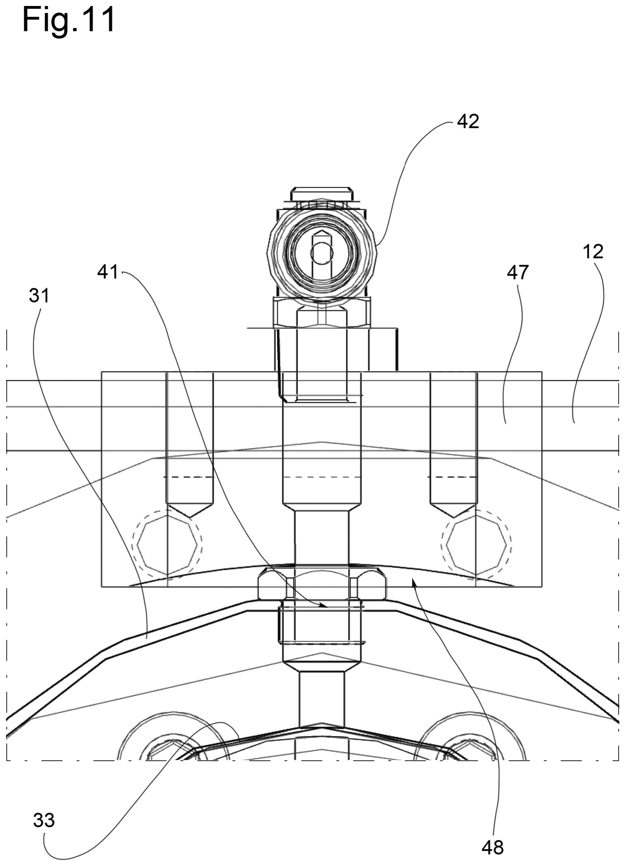

- Figure 11 shows an enlarged view of a detail of figure 10.

### Detailed description

The reciprocating drive apparatus for an operating head of a machine tool according to the invention is generally denoted by 1 in the accompanying Figures, whereas a machine tool equipped with said drive apparatus is denoted by 100; the operating head is denoted by 101.

Herein and in the following description and claims, reference will be made to the apparatus 1 in the condition of use. In this sense, any references to a lower or upper position, or to a horizontal or vertical orientation, shall be construed accordingly.

The machine tool 100 may be of any type, provided that it requires a reciprocating drive of an operating head. For example, the machine tool 100 may be a machine for shearing, punching, or stamping.

Figures 4 and 5 show two shearing machine tools according to the invention, provided respectively with three distinct reciprocating drive apparatuses and with a single reciprocating drive apparatus.

In accordance with a general embodiment, illustrated in figures 6 to 11, the apparatus 1 comprises a support structure 10 which is suitable for guiding an operating head 101 of a machine tool in an alternating linear movement along a reciprocating drive direction X.

The support structure 10 ensures precise alignment and stability of the head 101 during operation.

The apparatus further comprises a transmission body 20 associated with the support structure 10. The transmission body 20 is operable in rotation by motor means 21 (for example an electric motor) around a motor axis Y, which intersects the reciprocating drive direction X.

The apparatus 1 comprises a connecting rod 30 which is eccentrically connected to the transmission body 20 with respect to the motor axis Y. The connecting rod 30 is connected to the transmission body at a driven portion 31 thereof by means of a rotary joint 33 and is connected to the head 101 at a driving portion 32 opposite to the driven portion 31. The driven portion 31 of the connecting rod 30 moves along the reciprocating drive direction X between an upper dead centre (PMS) and a lower dead centre (PMI), imparting the alternating movement to the head 101.

The transmission body 20 and the connecting rod 30 together act as the main mechanism for converting rotary motion into alternating linear motion.

The apparatus 1 comprises a lubrication system 40 which is suitable to supply lubricant to said rotary joint 33 by means of a first lubrication nozzle 41 installed on the driven portion 31 of said connecting rod. The first lubrication nozzle 41 ensures the delivery of the lubricant directly to the rotary joint 33 during operation.

According to the invention, the lubrication system 40 further comprises a second lubrication nozzle 42 which is integral with the support structure 10. The second lubrication nozzle 42 is positioned to fluidically intercept the first lubrication nozzle 41 when the driven portion 31 of the connecting rod 30 is at the upper dead centre PMS.

The lubrication system 40 further comprises a lubricant supply circuit 43 which is in fluidic communication with the second lubrication nozzle 42.

The lubrication system 40 also comprises an electromechanical valve 44 operatively connected to the lubricant supply circuit 43.

The lubrication system 40 comprises a timer 45 which is synchronised with the movement of the connecting rod 30 and is configured to activate the electromechanical valve 44 when the driven portion 31 of the connecting rod 30 reaches the upper dead centre PMS.

Thanks to the invention, it is possible to eliminate a constant fluidic connection between the first nozzle and the lubricant supply circuit, alternatively providing an intermittent delivery of the lubricant that releases the lubrication system from sealed connections with the rotary joint.

Thanks to the synchronised delivery, it is ensured that the lubricant is supplied exactly when needed, minimising waste and optimising the lubrication efficiency.

Thanks to the invention, lubrication is provided appropriately at specific moments during the machine cycle, thereby protecting the durability of the components and the overall performance of the system.

The high-pressure intermittent delivery ensured by the presence of the electromechanical valve is operationally equivalent to a compensated low-pressure continuous delivery.

Thanks to the invention, a precise delivery of the lubricant is indeed ensured. The electromechanical valve 44 regulates the lubricant flow and is controlled by the timer 45. The lubricant supply circuit 43 therefore provides a controlled flow of lubricant to the second lubrication nozzle 42.

The apparatus 1 of reciprocating drive for a machine tool according to the invention is equipped with a lubrication system capable of reliably adapting to variable operating conditions, ensuring adequate lubrication in any operating regime.

The lubrication system 40 allows the improvement of the durability and performance of the rotary joint 33 by providing precise and adequate lubrication, without mechanical constraints with the connecting rod due to the intermittent delivery.

The synergistic interaction between the first and second lubrication nozzles 41, 42, the electromechanical valve 44 and the timer 45 synchronises the lubrication with the movement of the connecting rod 30, ensuring optimal timing and high efficiency. The regulation of the lubricant flow prevents excessive lubrication, reducing waste.

In particular, the electromechanical valve 44 is configured as a normally closed valve which opens only when activated by the timer 45. This configuration ensures that the lubricant is supplied only when needed, preventing unnecessary flows and conserving the lubricant.

The normally closed configuration of the electromechanical valve 44 minimises lubricant waste and ensures precise control of the lubrication process, improving the overall efficiency of the system. The normally closed configuration of the valve 44 also improves the reliability of the lubrication system by preventing unintentional lubricant flows, thus reducing waste and keeping the system clean.

Advantageously, as schematically illustrated in figure 6a, the timer 45 comprises a sensor 46 configured to detect the position of the connecting rod 30. The sensor determines when the connecting rod 30 reaches the upper dead centre PMS, allowing the timer 45 to synchronise the activation of the electromechanical valve 44 with the movement of the connecting rod 30.

The inclusion of a position sensor in the timer 45 ensures accurate synchronisation of the lubrication process with the movement of the connecting rod 30, improving the precision and reliability of the system.

Advantageously, the support structure 10 comprises a guide 11 configured to maintain the alternating linear movement of the operating head 101 along the reciprocating drive direction X. The guide ensures correct alignment between the second lubrication nozzle 42 and the first lubrication nozzle 41. In other words, the guide improves the stability and alignment of the operating head 101, ensuring a precise cyclic coupling between the lubrication nozzles and enhancing the reliability of the lubrication system.

Advantageously, the timer 45 is configured to adjust the activation duration of the electromechanical valve 44 in response to variations in the operating speed of the connecting rod 30. This ensures precise delivery of the lubricant under variable operating conditions.

The adjustment of the activation duration of the valve 44 allows the lubrication system to adapt to different operating speeds, ensuring optimal lubrication and reducing wear in dynamic conditions.

According to the embodiment illustrated in the accompanying figures, the second lubrication nozzle 42 is mounted on a block 47 made of a low-friction material. The block 47 is configured to maintain a minimum tolerance between the second lubrication nozzle 42 and the first lubrication nozzle 41, allowing intermittent injection of lubricant during each alternating cycle of the movement of the connecting rod 30.

The use of a low-friction material for the block 47 reduces wear and ensures a fluidic coupling between the lubrication nozzles, improving the durability and efficiency of the lubrication system.

Preferably, the low-friction material is polyzene.

Preferably, the minimum tolerance between the first lubrication nozzle 41 and the block 47 is configured to ensure efficient transfer of the lubricant without significant losses, optimising the performance of the lubrication system.

The minimum tolerance reduces lubricant losses, ensuring efficient and effective lubrication while reducing waste.

Preferably, the block 47 comprises a shaped seat 48 designed to receive the head of the first lubrication nozzle 41 in a sliding relationship as the connecting rod 30 reaches the upper dead centre (PMS).

The shaped seat 48 ensures precise alignment and coupling between the lubrication nozzles, improving the accuracy and reliability of the lubricant delivery.

In particular, the shaped seat 48 of the block 47 is a concave surface facing the connecting rod 30.

The concave surface of the shaped seat 48 improves the stability of the coupling between the lubrication nozzles, reducing misalignments and enhancing the efficiency of the lubrication.

Advantageously, the support structure 10 comprises a box-like containment body inside which the connecting rod 30 is housed. The containment body is provided with a removable cover 12 for access to the upper dead centre (PMS). The block 47 is separably associated with the cover 12.

The containment body protects the internal components, while the removable cover facilitates maintenance and inspection of the lubrication system, improving ease of use and maintainability. In particular, the replacement of the block 47 is facilitated.

Advantageously, the block 47 made of low-friction material is configured to reduce mechanical wear between the first lubrication nozzle 41 and the second lubrication nozzle 42 during the alternating movement of the connecting rod 30.

The low-friction material minimises friction and wear, prolonging the lifespan of the lubrication system and reducing maintenance requirements.

The invention allows to achieve numerous advantages already partially described.

The apparatus 1 of reciprocating drive for a machine tool according to the invention is equipped with a lubrication system capable of reliably adapting to variable operating conditions, ensuring adequate lubrication in any operating regime.

Thanks to the invention, the stroke of the movement of the connecting rod may increase or the operating speeds may accelerate, and the lubrication system is perfectly capable of supplying the lubricant in a timely and efficient manner. The intermittent flow approach proves to be more adaptable to dynamic conditions, wherein timing and precision in the application of the lubricant are important to maintain high performance and minimise mechanical wear.

The apparatus 1 according to the invention is particularly suitable for situations in which the movement of mechanical components exceeds traditional limits or operates at higher speeds, wherein conventional methods of lubricant delivery may not adequately address the demanding requirements of these applications. The apparatus 1 is therefore ideal for machines designed for extended strokes, as it allows effective lubrication to be maintained despite the spatial and temporal constraints that affect the contact of the lubricant with the critical moving surfaces.

The apparatus 1 of reciprocating drive for a machine tool according to the invention is simple and economical to manufacture.

The apparatus 1 of reciprocating drive for a machine tool according to the invention is simple and easy to manage.

The invention thus conceived achieves the intended objects.

Obviously, in its practical implementation it may also take on forms and configurations different from the one illustrated above without thereby departing from the present scope of protection.

Moreover, all the components may be replaced by technically equivalent elements, and the dimensions, shapes and materials used may be of any type depending on the requirements.

## Claims

1. Apparatus (1) of reciprocating drive for an operating head (101) of a machine tool (100) comprising:
- a support structure (10) which is suitable for guiding an operating head (101) of said machine tool in an alternating linear movement along a reciprocating drive direction (X);
- a transmission body (20) which is associated with said support structure (10) and is operable in rotation by motor means (21) around a motor axis (Y) incident to said direction (X);
- a connecting rod (30) which is eccentrically connected to said transmission body (20) with respect to said motor axis (Y) at a driven portion (31) thereof by means of a rotary joint (33) to impart said alternating linear movement to said operating head (101) which is kinematically connected to a driving portion (32) of said connecting rod, the driven portion (31) of said connecting rod having a stroke along said reciprocating drive direction (X) between an upper dead center (PMS) and a lower dead center (PMI);
- a lubrication system (40) which is suitable to supply lubricant to said rotary joint (33) through a first lubrication nozzle (41) installed on the driven portion (31) of said connecting rod,
**characterized in that** said lubrication system (40) comprises:
- a second lubrication nozzle (42), which is integral with said support structure (10) and is positioned to fluidically intercept the first lubrication nozzle (41) when the driven portion (31) of said connecting rod is at the upper dead center;
- a lubricant supply circuit (43) in fluidic communication with the second lubrication nozzle (42)
- an electromechanical valve (44) operatively connected to the lubricant supply circuit; and
- a timer (45) synchronized with the movement of the connecting rod (30) and configured to activate the electromechanical valve (44) when the driven portion (31) of said connecting rod reaches the upper dead center.

2. Apparatus according to claim 1, wherein the electromechanical valve (44) is configured as a normally closed valve that opens only when activated by the timer (45) to allow the passage of the lubricant under pressure from the second lubrication nozzle (42) to the first lubrication nozzle (41).

3. Apparatus according to claim 2 above, wherein the timer (45) comprises a sensor for detecting the position of the connecting rod (30) in order to determine when the connecting rod (30) reaches the upper dead center (PMS), thereby synchronizing the opening of the valve (44) and thus the delivery of the lubricant from the second lubrication nozzle (42) to the first lubrication nozzle (41).

4. Apparatus according to any one of the preceding claims, wherein the support structure (10) further comprises a guide configured to maintain the alternating linear movement of the operating head (101) along the direction (X), ensuring a proper alignment between the second lubrication nozzle (42) and the first lubrication nozzle (41).

5. Apparatus according to any one of the preceding claims, wherein the timer (45) is configured to adjust the duration of activation of the electromechanical valve (44) in response to variations in the operating speed of the connecting rod (30), ensuring precise delivery of the lubricant from the second lubrication nozzle (42) to the first lubrication nozzle (41).

6. Apparatus according to any one of the preceding claims, wherein the second lubrication nozzle (42) is mounted on a block (47) made of a low-friction material, preferably polyzene, which is configured to maintain a minimum tolerance between the second lubrication nozzle (42) and the first lubrication nozzle (41), allowing the intermittent injection of lubricant during each alternating cycle of the movement of the connecting rod (30) .

7. Apparatus according to claim 6, wherein the minimum tolerance between the first lubrication nozzle (41) and the block (47) is configured to ensure a fluid transfer of the lubricant without significant losses, optimizing the efficiency of the lubrication system.

8. Apparatus according to claim 6 or 7, wherein the block (47) is provided with a shaped seat (48) for receiving in a sliding relationship the head of the first lubrication nozzle (41) driven in movement by said connecting rod (30) to the upper dead center (PMS).

9. Apparatus according to claim 8, wherein the shaped seat (48) of the block (45) is a concave surface facing said connecting rod (30).

10. Apparatus according to any one of claims 6 to 9, wherein said support structure (10) comprises a box-like containment body inside which said connecting rod (30) is positioned and which is provided with a removable cover (12) for access to the upper dead center and wherein the block (45) is separably associated with said cover.

11. Apparatus according to any one of claims 6 to 10, wherein the block in low-friction material is configured to reduce mechanical wear between the first lubrication nozzle (41) and the second lubrication nozzle (42) during the alternating movement of the connecting rod (30).

12. Machine tool (100) comprising at least one reciprocating drive apparatus for an operating head (101) **characterized in that** said reciprocating drive apparatus (1) is according to any one of the preceding claims.
